# EUROPEAN PATENT SPECIFICATION

(11) **EP 2 913 228 B1**
(45) Date of publication and mention of the grant of the patent: **29.08.2018**
(21) Application number: 14157278.4
(22) Date of filing: 28.02.2014
(51) Int. Cl.: B60R 1/00, B64D 11/00, H04N 7/18, B60K 35/00

(54) **Vehicle with sensor controlled vision**
Fahrzeug mit sensorgesteuerter Sicht
Véhicule avec vision commandé par capteurs

(43) Date of publication of application: 02.09.2015
(73) Proprietor: Volvo Car Corporation, 40531 Göteborg (SE)
(72) Inventor: Stenvall, Lars, 45991 Ljungskile (SE); Hedebjörn, Anders, 41257 Göteborg (SE)
(74) Representative: Kransell & Wennborg KB

(56) References cited:
- WO-A1-2010/004547
- WO-A2-02/02302
- WO-A2-2006/024010
- WO-A2-2011/014085
- JP-A- 2003 335 185
- US-A1- 2008 086 241
- US-A1- 2009 195 652

## Description

### TECHNICAL FIELD

The present disclosure relates to a passenger carrying vehicle comprising a vehicle body and a passenger compartment inside the vehicle body. The vehicle may be of the type that can be displaced along a vehicle path by means of one or more displacement members arranged to contact the vehicle path and to constitute an interface between the vehicle and the vehicle path at which interface the vehicle is movable in relation to the vehicle path. The passenger carrying vehicles as disclosed herein include passenger controlled vehicles as well as vehicles that may be controlled from outside the vehicle.

### BACKGROUND

Over time, people travelling in vehicles such as cars have come to expect the vehicles to be provided with equipment for climate control and to be able to have a pleasant temperature inside the vehicle passenger compartment regardless of outside temperature and weather conditions. A drawback with electrically powered climate control equipment is that it may significantly increase the energy consumption of the vehicle. For battery powered vehicles, heating and cooling of the vehicle passenger compartment may reduce the available driving range of the vehicle with as much as 40%.

In order to reduce energy consumption relating to climate control in a vehicle, it has been suggested to use waste heat from the vehicle engine for heating of the passenger compartment. However, as vehicle engines have become increasingly more energy efficient, the engine waste heat is no longer sufficient to provide satisfactory heating of the passenger compartment.

Further attempts at reducing heat loss from the vehicle engine include storage of surplus engine heat in an accumulator or using an exhaust heat exchanger and heat pump technology to conserve and reuse heat in the vehicle. However, such technology is only applicable to vehicles having a combustion engine. In addition, the amount of energy needed is still relatively high.

Document WO 2010/004547 A1 relates to virtual reality, images and video, particularly to altering views of a virtual reality scene in response to movement of the environment, such as a vehicle. An embodiment of a train car shown therein is considered to constitute the closest prior art. Document US 2009/195652 A1 relates to a vision and image capture system for mobile platforms. The system comprises: an imaging sensor that comprises at least one imaging sub-sensor which is integrated in the outside walls of the platform; at least one display screen on which is displayed the images captured by the imaging sub-sensor; and a processing unit comprising hardware and software components for processing the gathered images, displaying them on the screen and optionally allowing other applications. The system of the invention is characterized in that the at least one imaging sub-sensor is mounted approximately at the height of the eyes of the operator of the system and at a predefined angle respective to the mobile platform matching the preferred viewing angle of the operator from his seat within the platform. This location and orientation of the imaging sub-sensor allows a life like simulation and presentation of the images on the screen to the operator as if he were looking at the scene through a transparent window in the side of the mobile platform.

At high outdoor temperatures, the demand is for indoor cooling, which is also highly energy consuming and has come to account for an increasing proportion of the energy consumption of a modern vehicle, and may amount to as much as up to 8 kW continuous energy demand.

In order to reduce the need of cooling, it has been suggested to use auto-shaded glass panels, Schukey engines and pre-cooling of the vehicle during parking and/or charging. Although the previously taken measures have alleviated the energy consumption problems arising when using climate control systems in passenger carrying vehicles, there still remains a need for a vehicle having reduced energy demands related to climate control.

### SUMMARY OF THE INVENTION

As set out herein, there is provided a passenger carrying vehicle being a battery powered or a hybrid car vehicle. It comprises a vehicle body and a passenger compartment the passenger compartment being at least partly surrounded by the vehicle body. The vehicle body has an outer surface facing away from the passenger compartment and an inner surface facing the passenger compartment. The vehicle body is arranged to prevent a passenger located in the passenger compartment from gaining a direct view of a vehicle path in a primary direction of travel of the vehicle. The passenger compartment is thermally insulated and the vehicle comprises a sensor arrangement for gathering real-time data from the vehicle environment, a display arrangement comprising a display device being located in the passenger compartment with the display arrangement being arranged to receive and display the real-time data from the sensor arrangement on the display device. The vehicle body comprises thermally insulating material, which is non-transparent to the human eye and which constitutes 80%-100% of the walls of the vehicle body. The vehicle as disclosed herein is non-see-through in a primary or forward direction of travel which means that the vehicle lacks a conventional wind-screen or front window. The vehicle may also be non-see-though in other directions such as in a rearward direction and/or in a side direction. Preferably, the vehicle is free from large glass panels, in particular large curved glass panels such as front and rear windows. The vehicle may be a window-less vehicle, as defined herein, implying that it is generally non-see-through and completely lacks conventional windows. This is accomplished by a vehicle body that comprises thermally insulating panelling which is non-transparent to the human eye and which constitutes 80% - 100% of the walls of the vehicle body, such as 90% to100% of the walls of the vehicle body or 95% to 100% of the walls of the vehicle body. The thermally insulating material may be in the form of panelling which fully or partly defines the shape of the vehicle body. Accordingly, the non-transparent thermally insulating panelling may form a thermally insulated shell or a capsule surrounding the passenger compartment.

By means of the sensor arrangement and the display arrangement which is connected to the sensor arrangement to form a data relay system for continuously transferring real-time information from outside the vehicle to inside the vehicle passenger compartment, an occupant of the vehicle passenger compartment may be continuously provided with information about the vehicle surroundings. Such information may be visual information in the form of continuously relayed images displayed on the display device in the passenger compartment. Hence, despite the generally non-transparent vehicle body which prohibits an occupant in the vehicle from directly obtaining visual information by looking out through the walls of the passenger compartment, an occupant of the vehicle may be able to obtain real-time visual information by looking at the display device of the display arrangement. Visual information gathered from the environment outside the vehicle may be directly transferred to the display arrangement and may be visualized as images on the display device. Consequently, the occupant may continuously form an understanding of the changing visual appearance of the environment outside the vehicle which closely resembles the understanding that may be formed by looking through a conventional vehicle window. In a case when the occupant is the driver of the vehicle, the continuously displayed real-time visual information allows the occupant to gather sufficient visual information to make it possible to safely steer the vehicle along the vehicle's travelling path, such as a public road, and to respond adequately to traffic situations as they appear along the travelling path.

The passenger carrying vehicle as disclosed herein may be any type of vehicle for transporting passengers along a vehicle path and may comprise displacement members which are arranged to contact a vehicle path and to constitute an interface between the vehicle and the vehicle path at which interface the vehicle is movable in relation to the vehicle path.

Such vehicles include cars, buses railway-carriages, cable cars, etc. which are intended for transporting occupants along predetermined pathways such as public roads or tracks.

The invention may be particularly applicable to occupant controlled vehicles such as cars, but may also be useful in other types of vehicles where an occupant may benefit from being able to monitor the vehicle surroundings in order, for instance, to enhance occupant experience when travelling in the vehicle. Another reason for wishing to be able to see and react to an outside environment may be to avoid discomfort to the occupant such as motion sickness, claustrophobia, or uneasiness that may arise from not being able to know what is outside the vehicle.

The visual relay system including the sensor arrangement and the display arrangement makes it possible to optimize the vehicle body for reducing energy loss. As disclosed herein, parts of a conventional vehicle body such as windscreens and other windows and body panels made of steel or aluminum having high thermal conductivity are preferably substituted by a thermally insulating material such as a fibre-reinforced composite material.

A particularly suitable thermally insulating material may comprise a dual-layer fibre reinforced composite material. The dual-layer fibre reinforced composite material is a sandwich construction with two outer shape-defining layers and an inner thermally insulating layer between the outer layers. The thermally insulating material may have an inner distance between the outer layers of from 30 mm to 100 mm, such as from 40 mm to 60 mm. The dual layer fibre reinforce composite material may be formed into a shell structure of any desired shape wherein a first outer layer of the composite may define an interior surface of the passenger compartment and/or a second outer layer of the composite may define an exterior surface of the vehicle. The composite material preferably has high rigidity and may be a light-weight material. Apart from providing thermal insulation, the thermally insulating material may also provide acoustic insulation of the passenger compartment.

The vehicle is a battery powered vehicle or a hybrid vehicle as set out herein. A particular advantage with such vehicles is that the energy savings on climate control inside the vehicle passenger compartment which are made possible by the thermally isolated vehicle body may considerably extend the driving range of the vehicle. For vehicles running on fuel, the fuel consumption may be significantly reduced which is advantageous for environmental and economic reasons.

The vehicle may comprise equipment allowing an occupant of the vehicle to control the vehicle. Such equipment may include a steering arrangement and equipment for speed control. The vehicle may be designed to allow access to the vehicle control equipment from one or more seats in the vehicle. The only requirement is that the visual display screen is placed or can be placed such that it allows the driver of the vehicle to obtain the necessary visual information of the vehicle surroundings.

The visual relay system comprising the sensor arrangement and the display arrangement may be adapted to provide an occupant inside the vehicle with a front view, a rear view and side views of the environment outside the vehicle. The views to the front, rear and sides may be continuous around the interior of the passenger compartment allowing an occupant a 360º view of the outside environment. Furthermore, the visual relay system may also provide the occupant with an upward view and/or with a downward view. The visual relay system may comprise equipment for enhancing and improving visual data such as image processing equipment allowing the displayed images to be shown with high quality and further allowing compensation for poor weather and/or light conditions. By way of example it may be possible to show images of a beautiful landscape even if the vehicle is travelling in complete darkness, through a tunnel or in poor weather.

The screen of the visual display arrangement may be placed on and/or be a part of the inner surface of the passenger compartment and may occupy 30-100% of the inner surface of the passenger compartment, such as 50-100% of the inner surface of the passenger compartment or 70-100% of the inner surface of the passenger compartment.

The screen may be a moveable screen. The display arrangement may comprise more than one screen and may comprise only movable screens, only stationary screens and/or a combination of one or more movable screens with one or more stationary screens. A movable screen may be arranged to allow adjustment of the position of the screen in a vertical and/or horizontal direction and to move the screen into a position suited to an occupant in the vehicle. The display arrangement may comprise one or more screens particularly adapted for providing a driver of the vehicle with visual information enabling the driver to correctly control the vehicle and one or more screens providing non-driving occupants with visual information of the surroundings.

The display screen of the display arrangement may be part of a head-set, such as a pair of virtual reality (VR) glasses. Combinations of occupant worn display devices and display screens mounted on the inner wall of the passenger compartment are also conceivable.

The vehicle may comprise equipment for passenger independent control of the vehicle allowing the vehicle to be driven/controlled from outside of the vehicle. Furthermore the vehicle may be provided with equipment for autonomous drive (AD). Such equipment may be in addition to occupant controlled driving equipment or may be alternative to occupant controlled equipment.

The sensory arrangement may further comprise equipment for gathering real-time sound data from the vehicle environment, and equipment for playing sound inside the vehicle compartment. Other types of conventional sensory equipment such as sensors for measuring outdoor temperature, humidity, etc. may also be provides. Such equipment may serve to convey information about the condition of a road surface such as if it is wet, slippery, rough, etc. The information may be conveyed to an occupant in the vehicle and/or to an autonomous drive system. When conveyed to an occupant, the information may be represented visually, acoustically or by haptics or by any combination of visual, acoustic and haptic representation.

The vehicle displacement members may comprise one or more wheels. When the vehicle is a car for personal transportation, it will typically be provided with four wheels.

Although the vehicle as disclosed herein lacks a conventional windscreen, the vehicle body may comprise an inspection window allowing an occupant inside the vehicle passenger compartment to look directly out through the vehicle body. An inspection window only allows the occupant a view in a single general direction and may be designed as a "peep-hole" in a wall of the vehicle body. The inspection window may be an openable and closable inspection window. An inspection window may also be arranged as a display window allowing a person outside the vehicle to see e.g. a parking ticket or allowing communication between a person inside the vehicle and a person or equipment outside the vehicle through the inspection window. Such communication may be desirable, for instance, when passing a toll gate or when it is required to show an identification document.

Thermally insulated vehicles being equipped with the information transfer system as disclosed herein may be particularly useful in personal transportation vehicles such as cars which have a large exposed area in relation to the number of passengers that can be transported by the vehicle. The thermal loss from such vehicles through conventional glass panes and metal parts of the vehicle body adds more to the energy consumption per passenger than in the case of larger vehicles such as buses.

The equipment used in the systems disclosed herein may be any suitable equipment for recording, processing, transferring, and displaying data and may include one or more cameras, one or more microphones one or more computers, one or more display screens such as TV-screens, projector screens, virtual reality (VR) glasses, loudspeakers, etc. Accordingly, the components of the system for transferring data from the outside of the vehicle to an occupant inside the vehicle are known by the skilled person and need not be described in detail. Likewise, it is also known to use sensors for auto-braking, lane departing, crash avoidance, auto parking, etc. which can be employed to further enhance the information system of the window-less vehicles as disclosed herein.

In addition to reducing energy consumption for the vehicles disclosed herein, the systems disclosed herein may provide several further benefits. One such advantage is that the need for keeping windows clean in order to allow occupants a clear view of the outside surroundings can be considerably reduced or even completely eliminated if the vehicle is free or practically free from conventional windows. Image enhancement techniques can be used to compensate for outside light conditions. Accordingly, the systems disclosed herein may give an occupant in a vehicle the same experience of looking out through a window as in a conventional vehicle but without the view being distorted by raindrops or dirt on the window. It is even possible to improve the visual impression of the surroundings e.g. by showing background images which are different from those retrievable from the outside reality. Accordingly, the images shown on the display device or display devices inside the passenger compartment may mimic the outside world or may have been altered or even be completely different from what can be seen on the outside. In particular for autonomously driven vehicles, there is generally not a need for an occupant of the vehicle to be able to see an exact representation of the outside world. Instead, it may be more desirable to focus on the provision of visual information making travelling in the vehicle agreeable. Moreover, the vehicle may be provided with different displays for different occupants in the vehicle, such that a driver of the vehicle may be shown information allowing safe driving of the vehicle while the information displayed to other passengers in the vehicle may be for comfort enhancement and/or entertainment.

The information systems disclosed herein, may be part of an infotainment system and may be provided with means for allowing an occupant in the vehicle to choose between different display modes such as a pure informational mode, a pure entertainment mode and a combined information/entertainment mode. The system may also be provided with means for allowing an occupant in the vehicle to select the information that is displayed on the display device.

Furthermore, without glass panes, the shape of the vehicle can be aerodynamically optimized and the materials used for the vehicle body can be selected to reduce weight of the vehicle and to provide optimum strength without consideration of transparency. As a consequence, the invention provides a means for considerably reducing energy consumption caused by thermal energy transfer through a vehicle body framework while at the same time improving vision inside the vehicle.

The arrangement as disclosed herein also makes it possible to dispense with conventional equipment such as head-lights being arranged to illuminate the road, windshield wipers, window heaters, a load bearing window supporting frame-work, etc. In a vehicle such as a car as disclosed herein, it would normally be sufficient to equip the vehicle with positional lights such that it can be seen from the outside e.g. by an occupant of another vehicle or a pedestrian.

### DEFINITIONS

By the term *"window-less"* as used herein, is implied that the vehicle lacks conventional see-through windows or panels such as a front wind-screen, side windows and a rear window allowing an occupant/passenger inside the vehicle to directly gather visual information about the vehicle environment from multiple directions, and enabling the occupant by looking out through the window to drive the vehicle or to continuously form an impression of the surroundings helping e.g. to counter-act motion sickness. Although a window-less vehicle may have a completely non-transparent vehicle body, it may be provided with small-sized see-through portions forming inspection windows or "peep-holes" in the vehicle body as set out herein. Such peep-holes may be provided with closure means, if desired.

By the term *"battery powered vehicle"* as used herein is implied a vehicle with a propulsion system including an engine having one or more batteries as a main power source. Battery powered vehicles include hybrid vehicles which can use either a battery or another power source.

By the term *"occupant controlled vehicle"* or *"passenger controlled vehicle"* is implied a vehicle such as a car which includes means for allowing a passenger/occupant in the vehicle to drive and steer the vehicle along a vehicle path.

The terms *"passenger"* and *"occupant"* are used interchangeably herein.

A *"vehicle path"* as used herein is any road, path, track, rail, etc. along which the vehicle may move. In the case of the vehicle being a car, a bus or a truck, the vehicle path is typically a public road.

By a *"thermally insulating material",* as used herein, is implied a material which is specifically designed for providing thermal insulation and having low thermal conductivity. In particular, thermally insulating materials do not include glass panels, metal sheeting or other metal parts of a vehicle. Thermally insulating materials suitable for use in the arrangement as disclosed herein are preferably designed with sufficient rigidity and shock resistance to allow them to be used in load bearing structures of the vehicle. The thermally insulating materials may be formed into shape retaining shells, pods or capsules forming part of or all of a vehicle body and partly or fully surrounding a passenger compartment in the vehicle.

### BRIEF DESCRIPTION OF THE DRAWINGS

The present invention will hereinafter be further explained by means of non-limiting examples with reference to the appended drawings wherein:
- Fig. 1: shows a perspective view of a vehicle in the form of a car;
- Fig. 2: shows the car in Fig. 1 occupied by four passengers; and
- Fig. 3: shows a composite vehicle body.

### DETAILED DESCRIPTION

The invention will, in the following, be exemplified by embodiments. It should, however, be realized that the embodiments are included in order to explain principles of the invention and not to limit the scope of the invention, as defined by the appended claims. Details from two or more of the embodiments may be combined with each other.

Although the vehicles of the invention are exemplified by reference to a car for personal transportation, it is to be understood that the invention is applicable also to other types of vehicles such as buses, trains, etc. as disclosed herein.

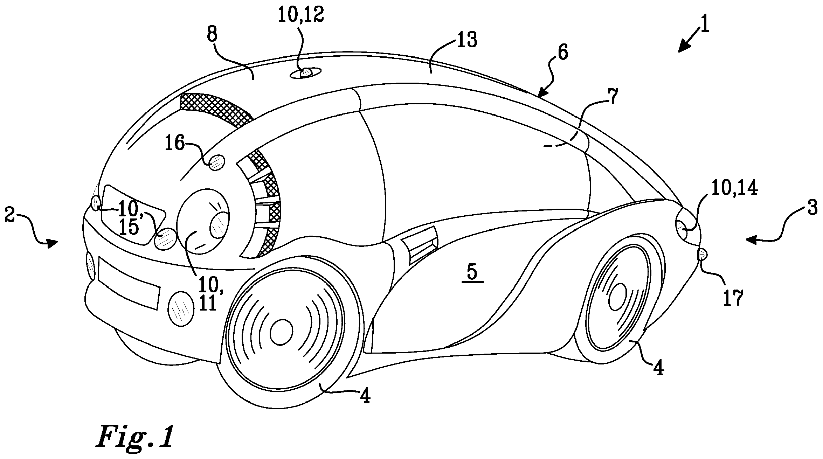

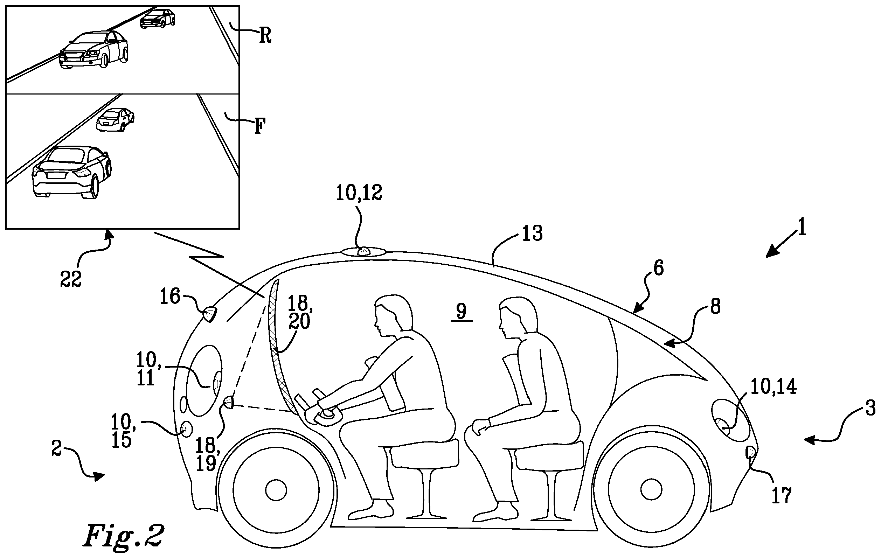

In Figs. 1 and 2 there is shown a passenger carrying vehicle 1 in the form of a car for personal transportation. The vehicle 1 is shown to have an aerodynamic shape with a blunt front end 2 and a pointed rear end 3. The vehicle 1 is provided with four wheels 4 and side doors 5 allowing passengers to get into and out of the vehicle. It is to be understood that details such that the shape and size of the vehicle, placement and number of wheels, placement and number of doors etc. are non-essential features of the invention and may be changed within the competence of the person skilled in the art to suit the particular transportation requirements of the passenger carrying vehicle.

The vehicle has a vehicle body 6 and a passenger compartment 7 inside the vehicle body 6. The vehicle body 6 has an outer surface 8 which is exposed to the outside surroundings of the vehicle and an inner surface 9 facing the passenger compartment 7. The vehicle body 6 at least partially encloses the passenger compartment 7 and may be made in a single part or may be assembled from two or more parts. The passenger compartment 7 may be fully or partly delimited by the vehicle body 6 and/or any interior panelling on the inner surface of the vehicle body. Furthermore, the passenger compartment 7 may be partly delimited by one or more components of a main frame of the vehicle, such as a base plate and/or panelling on an inner side of such main frame components.

The vehicle body comprises thermally insulating material which is non-transparent to the human eye and which constitutes a major proportion of the walls of the vehicle body, such as 80% - 100% of the walls of the vehicle body, 90% to 100% of the walls of the vehicle body, or 95% to 100% of the walls of the vehicle body. The thermally insulating material may be in the form of panelling, such as a panel material with a thermo isolating core structure between two outer layers.

The vehicle comprises a sensor arrangement 10 for gathering real-time data from the vehicle environment. The sensor arrangement as shown in Figs. 1 and 2 comprises forward cameras 11 placed at the front end 2 of the vehicle 1, a top camera 12 placed on the roof 13 of the vehicle 1, rearward cameras 14 placed at the rear end 3 of the vehicle 1 and IR cameras 15 placed at the front end 2 of the vehicle 1. As shown in Fig. 2, the top camera 12 may be a 360º camera.

In addition, the sensor arrangement 10 may include one or more radars such as front radars 16 and rear radars 17 shown in Fig. 2 and one or more microphones.

The vehicle further comprises a display arrangement 18 comprising a projector 19 and a projector screen 20 which is located in the passenger compartment 7. The display arrangement 18 is arranged to receive and display the real-time visual data retrieved by the cameras 11-15 on the outside of the vehicle in the form of images 22 which are displayed on the projector screen 20. As illustrated in Fig. 2, the projector screen 20 may show multiple views, such as a rear view R and a front view F. The display arrangement 18 may also or alternatively be arranged to receive and display other types of information that may be visually represented on the same display device or on one or more additional display devices. Accordingly, the display arrangement 18 may partly or completely replace a traditional dashboard and may show information about outside temperature, weather conditions, the distance to outside objects, and other travel information. As set out herein, other types of display arrangements may be used in the thermally insulated window-less vehicle of the invention such as TV screens and VR glasses.

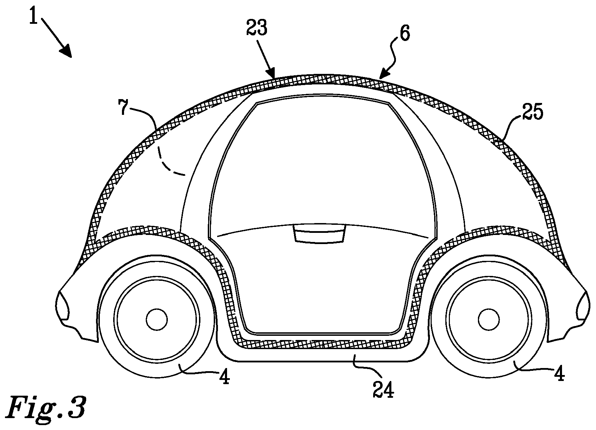

Fig. 3 illustrates a vehicle 1 having a vehicle body 6 in the form of a shell 23 formed in one piece from a thermally insulating composite material 25. In the example shown in Fig. 3, the vehicle body 6 generally defines the shape of the vehicle 1 and completely encloses the passenger compartment 7 on the inside of the vehicle body 6. The floor of the passenger compartment forms part of the vehicle's base plate 24 which also supports the wheels 4. Fig. 3 also illustrates that the thermally insulated window-less vehicles as disclosed herein may be given any desired shape.

As set out herein, the thermally insulating composite material 25 may be provided as a sandwich construction with an inner heat insulation structure placed between outer shape-defining layers. The outer layers of the composite material are rigid layers and may be formed from a reinforced polymeric composite material providing shape stability to the vehicle body 6. The heat insulation structure may be a foam or other cell structure. Such reinforced composite materials are generally light-weight as compared to glass panels and metal paneling and reduce the overall weight of the vehicle, which has a positive effect on energy consumption. The composite materials may be formed into any suitable outer shape e.g. by molding, die-casting etc.

## Claims

1. A passenger carrying vehicle (1) being a car comprising a vehicle body (6) and a passenger compartment (7) at least partly surrounded by said vehicle body (6), said vehicle body (6) having an outer surface (8) facing away from said passenger compartment (7) and an inner surface (9) facing said passenger compartment (7), said vehicle body (6) being arranged to prevent a passenger located in said passenger compartment (7) from gaining a direct view of a vehicle path in a primary direction of travel of said vehicle, said vehicle (1) comprising a sensor arrangement (10) for gathering real-time data from said vehicle environment, a display arrangement (18) comprising a display device (20) being located in said passenger compartment (7), said display arrangement (18) being arranged to receive and display said real-time data from said sensor arrangement (10) on said display device (20), **characterized in that** said passenger compartment (7) is thermally insulated and said vehicle body (6) comprises thermally insulating material, which is non-transparent to the human eye and which constitutes 80% - 100% of the walls of said vehicle body (6), and wherein said vehicle (1) is a battery powered vehicle or a hybrid vehicle.

2. A vehicle according to claim 1, wherein said vehicle (1) comprises one or more displacement members being arranged to contact said vehicle path and to constitute an interface between said vehicle (1) and said vehicle path at which interface said vehicle (1) is movable in relation to said vehicle path.

3. A vehicle according to claim 1 or 2, wherein said real-time data comprises visual data.

4. A vehicle according to any one of the preceding claims, wherein said vehicle (1) comprises equipment for passenger independent control of said vehicle.

5. A vehicle according to claim 4, wherein said vehicle (1) comprises an autonomous drive (AD) system.

6. A vehicle according to any one of the preceding claims, wherein said thermally insulating material comprises a dual-layer fibre reinforced composite material.

7. A vehicle according to any one of the preceding claims, wherein said sensor arrangement (10) comprises equipment for gathering real-time sound data from said vehicle environment, and equipment for playing sound inside said passenger compartment (7).

8. A vehicle according to any one of claims 2-7, wherein said one or more vehicle displacement members comprises one or more wheels (4).

9. A vehicle according to any one of the preceding claims, wherein said sensor arrangement (10) and said display arrangement (18) are arranged to provide a passenger inside said vehicle (1) with a 360º view of said vehicle surroundings.

10. A vehicle according to any one of the preceding claims, wherein said display device (20) is a display screen which is placed on and/or is a part of an inner surface of said passenger compartment (7).

11. A vehicle according to any one of the preceding claims, wherein said display device (20) is a moveable display screen.

12. A vehicle according to any one of claims 1-9 wherein said display device (20) is part of a head-set.

13. A vehicle according to any one of the preceding claims, wherein said vehicle is a window-less vehicle.

## Patentansprüche

1. Fahrzeug (1) zur Personenbeförderung, bei dem es sich um ein Auto handelt, das einen Fahrzeugaufbau (6) und einen Fahrgastraum (7) umfasst, der wenigstens zum Teil von dem Fahrzeugaufbau (6) umgeben ist, wobei der Fahrzeugaufbau (6) eine Außenfläche (8), die von dem Fahrgastraum (7) abgewandt ist, und eine Innenfläche (9), die dem Fahrgastraum (7) zugewandt ist, aufweist, wobei der Fahrzeugaufbau (6) so angeordnet ist, dass er verhindert, dass ein in dem Fahrgastraum (7) befindlicher Fahrgast eine direkte Sicht auf einen Fahrzeugweg in einer Hauptfahrtrichtung des Fahrzeugs erhält, wobei das Fahrzeug (1) eine Sensoranordnung (10) umfasst, um Echtzeitdaten aus der Umgebung des Fahrzeugs zu erfassen, und eine Anzeigeanordnung (18), die eine Anzeigevorrichtung (20) umfasst, die sich in dem Fahrgastraum (7) befindet, wobei die Anzeigeanordnung (18) so angeordnet ist, dass sie die von der Sensoranordnung (10) kommenden Echtzeitdaten empfängt und auf der Anzeigevorrichtung (20) anzeigt, **dadurch gekennzeichnet, dass** der Fahrgastraum (7) wärmegedämmt ist und der Fahrzeugaufbau (6) ein Wärmedämmmaterial umfasst, das für das menschliche Auge undurchsichtig ist und das 80 bis 100 Prozent der Wände des Fahrzeugaufbaus (6) bildet, und wobei es sich bei dem Fahrzeug (1) um ein batteriebetriebenes Fahrzeug oder ein Hybridfahrzeug handelt.

2. Fahrzeug nach Anspruch 1, wobei das Fahrzeug (1) ein oder mehrere Verlagerungselemente umfasst, die so angeordnet sind, dass sie den Fahrzeugweg berühren und eine Grenzfläche zwischen dem Fahrzeug (1) und dem Fahrzeugweg bilden, wobei das Fahrzeug (1) an der Grenzfläche in Bezug auf den Fahrzeugweg bewegbar ist.

3. Fahrzeug nach Anspruch 1 oder 2, wobei die Echtzeitdaten Sichtdaten umfassen.

4. Fahrzeug nach einem der vorhergehenden Ansprüche, wobei das Fahrzeug (1) Vorrichtungen für eine fahrgastunabhängige Steuerung des Fahrzeugs umfasst.

5. Fahrzeug nach Anspruch 4, wobei das Fahrzeug (1) ein autonomes Antriebssystem (AD-System) umfasst.

6. Fahrzeug nach einem der vorhergehenden Ansprüche, wobei es sich bei dem Wärmedämmmaterial um einen zweilagigen Faserverbundwerkstoff handelt.

7. Fahrzeug nach einem der vorhergehenden Ansprüche, wobei die Sensoranordnung (10) Vorrichtungen zum Erfassen von Echtzeitgeräuschdaten aus der Umgebung des Fahrzeugs und Vorrichtungen zum Abspielen der Geräusche in dem Fahrgastraum (7) umfasst.

8. Fahrzeug nach einem der Ansprüche 2 bis 7, wobei das eine oder die mehreren Fahrzeugverlagerungselemente ein oder mehrere Räder (4) umfassen.

9. Fahrzeug nach einem der vorhergehenden Ansprüche, wobei die Sensoranordnung (10) und die Anzeigeanordnung (18) so angeordnet sind, dass einem Fahrgast in dem Fahrzeug (1) eine 360°-Sicht der Umgebung des Fahrzeugs vermittelt wird.

10. Fahrzeug nach einem der vorhergehenden Ansprüche, wobei es sich bei der Anzeigevorrichtung (20) um einen Bildschirm handelt, der auf einer Innenfläche des Fahrgastraums (7) platziert ist und/oder einen Teil derselben bildet.

11. Fahrzeug nach einem der vorhergehenden Ansprüche, wobei es sich bei der Anzeigevorrichtung (20) um einen beweglichen Bildschirm handelt.

12. Fahrzeug nach einem der Ansprüche 1 bis 9, wobei die Anzeigevorrichtung (20) Teil eines Headsets bildet.

13. Fahrzeug nach einem der vorhergehenden Ansprüche, wobei es sich bei dem Fahrzeug um ein fensterloses Fahrzeug handelt.

## Revendications

1. Véhicule de transport de passagers (1) étant une voiture comprenant une carrosserie de véhicule (6) et un habitacle (7) au moins partiellement entouré par ladite carrosserie de véhicule (6), ladite carrosserie de véhicule (6) ayant une surface externe (8) tournée à l'opposé dudit habitacle (7) et une surface interne (9) tournée vers ledit habitacle (7), ladite carrosserie de véhicule (6) étant conçue pour empêcher un passager situé dans ledit habitacle (7) de voir directement une trajectoire de véhicule dans une direction principale de déplacement dudit véhicule, ledit véhicule (1) comprenant un agencement de capteurs (10) pour collecter des données en temps réel dudit environnement de véhicule, un agencement d'affichage (18) comprenant un dispositif d'affichage (20) situé dans ledit habitacle (7), ledit agencement d'affichage (18) étant conçu pour recevoir et afficher lesdites données en temps réel provenant dudit agencement de capteurs (10) sur ledit dispositif d'affichage (20), **caractérisé en ce que** ledit habitacle (7) est isolé thermiquement et ladite carrosserie de véhicule (6) comprend un matériau thermiquement isolant, qui n'est pas transparent pour l'oeil humain et qui constitue de 80 à 100 % des parois de ladite carrosserie de véhicule (6), et ledit véhicule (1) étant un véhicule alimenté par batterie ou un véhicule hybride.

2. Véhicule selon la revendication 1, ledit véhicule (1) comprenant un ou plusieurs éléments de déplacement conçus pour entrer en contact avec ladite trajectoire de véhicule et pour constituer une interface entre ledit véhicule (1) et ladite trajectoire de véhicule, interface au niveau de laquelle ledit véhicule (1) est mobile par rapport à ladite trajectoire de véhicule.

3. Véhicule selon la revendication 1 ou 2, lesdites données en temps réel comprenant des données visuelles.

4. Véhicule selon l'une quelconque des revendications précédentes, ledit véhicule (1) comprenant un équipement pour la commande indépendante du passager dudit véhicule.

5. Véhicule selon la revendication 4, ledit véhicule (1) comprenant un système d'entraînement autonome (AD).

6. Véhicule selon l'une quelconque des revendications précédentes, ledit matériau thermiquement isolant comprenant un matériau composite renforcé par des fibres à deux couches.

7. Véhicule selon l'une quelconque des revendications précédentes, ledit agencement de capteurs (10) comprenant un équipement pour collecter des données sonores en temps réel dudit environnement de véhicule, et un équipement pour lire du son à l'intérieur dudit habitacle (7).

8. Véhicule selon l'une quelconque des revendications 2 à 7, ledit au moins un élément de déplacement de véhicule comprenant une ou plusieurs roues (4).

9. Véhicule selon l'une quelconque des revendications précédentes, ledit agencement de capteurs (10) et ledit agencement d'affichage (18) étant conçus pour fournir à un passager à l'intérieur dudit véhicule (1) une vue à 360° dudit environnement de véhicule.

10. Véhicule selon l'une quelconque des revendications précédentes, ledit dispositif d'affichage (20) étant un écran d'affichage qui est placé sur une surface interne dudit habitacle (7) et/ou fait partie de celle-ci.

11. Véhicule selon l'une quelconque des revendications précédentes, ledit dispositif d'affichage (20) étant un écran d'affichage mobile.

12. Véhicule selon l'une quelconque des revendications 1 à 9, ledit dispositif d'affichage (20) faisant partie d'un casque.

13. Véhicule selon l'une quelconque des revendications précédentes, ledit véhicule étant un véhicule sans fenêtre.
